# EUROPEAN PATENT SPECIFICATION

(11) **EP 1 407 872 B1**
(45) Date of publication and mention of the grant of the patent: **07.03.2007**
(21) Application number: 03022240.0
(22) Date of filing: 01.10.2003
(51) Int. Cl.: B29C 45/53, B29C 45/02, B29B 7/32, B29B 7/60, B01F 15/04, B01F 15/02

(54) **Apparatus for preparing two-component silicone**
Vorrichtung zur Herstellung von Silikon aus zwei Komponenten
Dispositif pour la préparation de silicone à base de deux composants

(30) Priority: 08.10.2002 IT MI20022137
(43) Date of publication of application: 14.04.2004
(73) Proprietor: Galbusera, Pietro, 20043 Arcore (Prov.of Milan) (IT); Galbusera, Ruggero, 20043 Arcore (Prov.of Milan) (IT)
(72) Inventor: Galbusera, Pietro, 20043 Arcore (Prov.of Milan) (IT); Galbusera, Ruggero, 20043 Arcore (Prov.of Milan) (IT)
(74) Representative: Modiano, Micaela Nadia

(56) References cited:
- EP-A- 0 393 687
- EP-A- 0 719 623
- WO-A-96/00641
- DE-A- 3 400 309
- GB-A- 930 377
- US-A- 4 312 463
- US-A- 4 363 426
- US-A- 5 542 578

## Description

The present invention relates to an apparatus for preparing two-component silicone and for feeding it to an injection-molding press or to a mold.
Apparatuses for preparing two-component silicone and for feeding it to an injection-molding press are known.

The two components of the silicone, which must be mixed in equal doses, are generally stored within cylindrical drums.

Known kinds of apparatus generally comprise two fixed-volume piston pumps, which operate by means of hydraulic cylinders and with a delivery pressure of approximately 150 bars. Each pump works while immersed in the corresponding component of the silicone and conveys a fixed flow-rate of the corresponding silicone component to a same duct that supplies the injection-molding press, which injects the silicone into the mold.

These apparatuses suffer a few problems.

The high operating pressure of the pumps in fact requires an adequate sizing of the entire pumping line and the adoption of safety measures in order to prevent accidents, and also causes the entire management of the apparatus to be complicated.

Furthermore, these apparatuses are capable of delivering a substantially fixed flow-rate, which cannot be altered in order to meet different requirements of users.

Cleaning these apparatuses upon changes of material is also long and laborious, since it requires disassembling many components with consequent long machine downtimes, which cause loss of production.

US-A-4 312 463 discloses an apparatus for delivering two viscous fluids from their respective containers, having a combination of features as set forth in the precharacterising portion of the appended claim 1.

The aim of the present invention is to solve the problems described above by providing an apparatus for preparing two-component silicone that is simple to manage and is highly flexible in operation, so as to fully meet the most disparate requirements of users.

Within this aim, an object of the invention is to provide an apparatus that is simple and quick to clean, so as to reduce considerably machine downtimes during changes of material.

Another object of the invention is to provide an apparatus that is highly precise in dosing the material regardless of the amount of material dosed.

Another object of the invention is to provide an apparatus that can be manufactured at competitive costs.

In accordance with the invention, there is provided an apparatus for preparing two-component silicone and for feeding it to an injection-molding press or to a mold, as defined in the appended claims.

Further characteristics and advantages of the invention will become better apparent from the description of a preferred but not exclusive embodiment of the apparatus according to the invention, illustrated by way of nonlimitative example in the accompanying drawings, wherein:
Figure 1 is a schematic perspective view of the apparatus according to the invention;
Figure 2 is an enlarged-scale and partially sectional view of a detail of Figure 1;
Figures 3 to 5 are partially sectional top plan views of a detail of Figure 1, illustrating sequentially the operation of the pre-dosage chambers and of the injection means.

With reference to the figures, the apparatus according to the invention, generally designated by the reference numeral 1, comprises drawing means 2 for drawing the two components of the silicone from respective containers 3 and for conveying them at low pressure into respective pre-dosage chambers 4a and 4b.

The drawing means 2 are composed of two units, respectively designated by the reference numerals 5a and 5b, one for the first component of the silicone and the other for the second component of the silicone, which must be mixed in equal parts in order to produce the silicone to be molded.

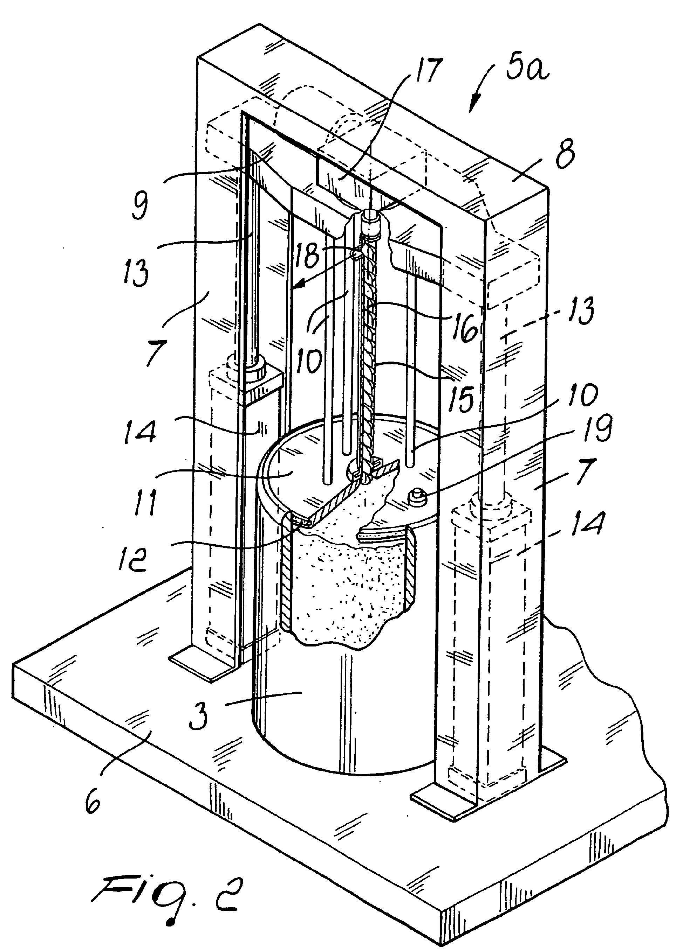

The two units 5a and 5b are substantially identical and for this reason, for the sake of simplicity in description, only the unit 5a, shown in particular in Figure 2, is now described, it being understood that what is described for unit 5a also applies to unit 5b.

Unit 5a of the drawing means 2 is substantially composed of a footing 6, which can also be shared with unit 5b and from which two posts 7 rise; such posts are connected at their upper end by a cross-member 8. The footing 6 forms a substantially horizontal supporting surface for the storage drum 3 that contains one component of the silicone. The posts 7 form two sliding guides for a movable structure 9, which is connected monolithically, by means of bars 10, to a presser disk 11, which is arranged on a substantially horizontal plane. The diameter of the presser disk 11 is such as to allow insertion of the presser disk 11 in the storage container 3 through its top end after the lid has been removed from said end.

Furthermore, the presser disk 11 is provided perimetrically with a sealing gasket 12, which allows the hermetic sliding of the presser disk 11 along the inner side walls of the storage container 3.

The movable structure 9 is further connected to the stems 13 of the piston of two hydraulic or pneumatic cylinders 14, which have a vertical axis and can be actuated in order to produce the translational motion, in a vertical direction, of the movable structure 9 and therefore of the presser disk 11. In practice, by way of the activation of the hydraulic or pneumatic cylinders 14, the presser disk 11, arranged coaxially above the open upper end of the storage container 3, is gradually lowered so as to hermetically engage the inner side walls of the storage container 3 and so as to gradually descend into the storage container 3, acting as a plunger.

The drawing means further comprise a tube 15, which preferably has a vertical axis and is connected in an upward region with respect to the presser disk 11. The lower end of the tube 15 is fixed to the presser disk 11 at an intake port that passes through the presser disk 11 so that the inside of the tube 15 is connected to the inside of the storage container 3 once the presser disk 11 has been inserted in said storage container 3.

A screw feeder 16 is accommodated inside the tube 15 and coaxially thereto and can be actuated with a rotary motion about its own axis by means of a gearmotor 17, preferably of the variable-speed type, which is supported by the movable structure 9. The actuation of the screw feeder 16 with a rotary motion about its own axis produces the gradual advancement of the component of the silicone along the tube 15 starting from its end that is connected to the presser disk 11 toward the opposite end, proximate to which there is an outlet port 18, which is connected to the pre-dosage chamber 4a, as will become better apparent hereinafter.

Conveniently, the presser disk 11 is provided with a vent valve 19 in order to allow evacuation of the air that is present between the free surface of the component of the silicone stored in the container 3 and the lower face of the presser disk 11 when said disk is inserted in the storage container 3.

The tube 15 is connected to the pre-dosage chamber 4a by means of a duct 20a, along which it is possible to conveniently arrange a further air vent valve in order to allow evacuation of the air when operation of the apparatus begins.

Correspondingly, the unit 5b, the detailed description of which has been omitted for the sake of simplicity, conveys the other component of the silicone into the pre-dosage chamber 4b through a duct 20b.

The pre-dosage chambers 4a and 4b are formed inside respective cylinders 21a and 21b, in which one end is connected to a head 22 and the opposite end is connected to a supporting plate 23. The pre-dosage chambers 4a and 4b are substantially cylindrical, and each one accommodates a plunger 24a, 24b provided with a stem 25a, 25b that protrudes from the axial end of the chamber 4a, 4b that lies opposite the head 22.

Each pre-dosage chamber 4a, 4b has, at a first end constituted by the end that is connected to the head 22, a port 26a, 26b that can be selectively connected, through a controllable three-way valve 27a, 27b, to the duct 20a, 20b or to an injection duct 29 shared by the two ports 26a, 26b.

Each one of the three-way valves 27a, 27b has a flow control element 30a, 30b, for example of the rotary type, which can move on command from a first position, in which it connects the port 26a, 26b to the corresponding duct 20a, 20b and blocks the connection of the port 26a, 26b to the injection duct 29, to a second position, in which it connects the port 26a, 26b to the injection duct 29 and blocks the connection of the port 26a, 26b to the corresponding duct 20a, 20b.

Preferably, the pre-dosage chambers 4a, 4b, which have identical dimensions, are arranged side by side parallel to each other.

The apparatus according to the invention is provided with means for delimiting the stroke of the plungers 24a, 24b in the pre-dosage chambers 4a, 4b in order to allow extremely precise dosage of the volume of the components of the silicone introduced in the pre-dosage chambers 4a and 4b.

Said means for delimiting the stroke of the plungers 24a, 24b comprise a pusher plate 31, which faces the end of the stems 25a, 25b that protrudes from the pre-dosage chambers 4a, 4b on the opposite side with respect to the head 22. The pusher plate 31 forms a stop element for the motion of the plungers 24a, 24b away from the head 22 following the introduction, in the corresponding pre-dosage chamber 4a, 4b, of the silicone component performed by the drawing means described above.

The pusher plate 31 can move on command in order to vary its position along an adjustment direction that is parallel to the axes of the pre-dosage chambers 4a, 4b and in order to vary correspondingly the stroke allowed to the plungers 24a, 24b away from the head 22 and therefore vary the volume of the pre-dosage chambers 4a, 4b that can actually be filled by the components of the silicone.

The movement of the pusher plate 31 along the adjustment direction, in the illustrated embodiment, is actuated by means of a gearmotor 32, which is connected to the pusher plate 31 by means of a screw-and-nut transmission. More particularly, the pusher plate 31 is fixed to the end of a pair of supporting bars 33, which are connected together at their opposite end by a cross-member 34. The bars 33 are supported by a block 35 so that they can slide along their axis, which is parallel to the axes of the pre-dosage chambers 4a, 4b. The pusher plate 31 is further connected to the cross-member 34 by means of a threaded shaft 36, whose axis is parallel to the axis of the bars 33 and mates with a female thread, not shown in the figures, which is supported by a gear that is turned about its own axis by the gearmotor 32.

In practice, by actuating the gearmotor 32, the pusher plate 31 is made to perform a translational motion toward or away from the head 22.

The apparatus further comprises injection means for simultaneously expelling the two components of the silicone from the pre-dosage chambers 4a, 4b and for conveying them along the injection duct 29.

Such injection means comprise the pusher plate 31, which can perform a translational motion, by means of the gearmotor 32, toward the head 22 in order to push the plungers 24a, 24b toward the head 22 and therefore empty the pre-dosage chambers 4a, 4b when the flow control elements 30a, 30b of the three-way valves 27a, 27b are in the second position.

The gearmotor 32 can be constituted by a gearmotor with fixed speed and torque, so as to actuate the pusher plate 31 with a constant speed and thrust, accordingly achieving conveyance of the silicone along the injection duct 29 at a constant flow rate and pressure.

As an alternative, the gearmotor 32 can be equipped with a variable-speed variable-torque motor, so as to drive the pusher plate 31 with variable thrust and speed in order to vary accordingly the flow-rate and pressure of the silicone along the injection duct 29, as will become better apparent hereinafter.

Means for mixing the two components of the silicone are conveniently provided along the injection duct 29. Such mixing means can be constituted by a static mixer of a known type, which is not shown for the sake of simplicity.

A hole 40 for introducing a dye in the silicone can be provided along said injection duct 29.

The injection duct 29 can be connected to an injection-molding press of the conventional type or can be provided simply with an injection nozzle and be inserted in a mold.

The pressure in the pre-dosage chambers 4a, 4b or along the ducts 20a, 20b can be controlled by means of pressure sensors, of a known type and not shown for the sake of simplicity, which are functionally connected to the drawing means in order to interrupt pumping of the corresponding component of the silicone when the corresponding pre-dosage chamber 4a or 4b is full, as will become better apparent hereinafter.

The operation of the apparatus according to the invention is as follows.

The storage containers 3, each of which contains the corresponding component of the silicone, are arranged on the footing 6 and are opened by removing the lid from their top end. During this operation, the presser disks 11 of the units 5a and 5b are raised above the storage containers 3.

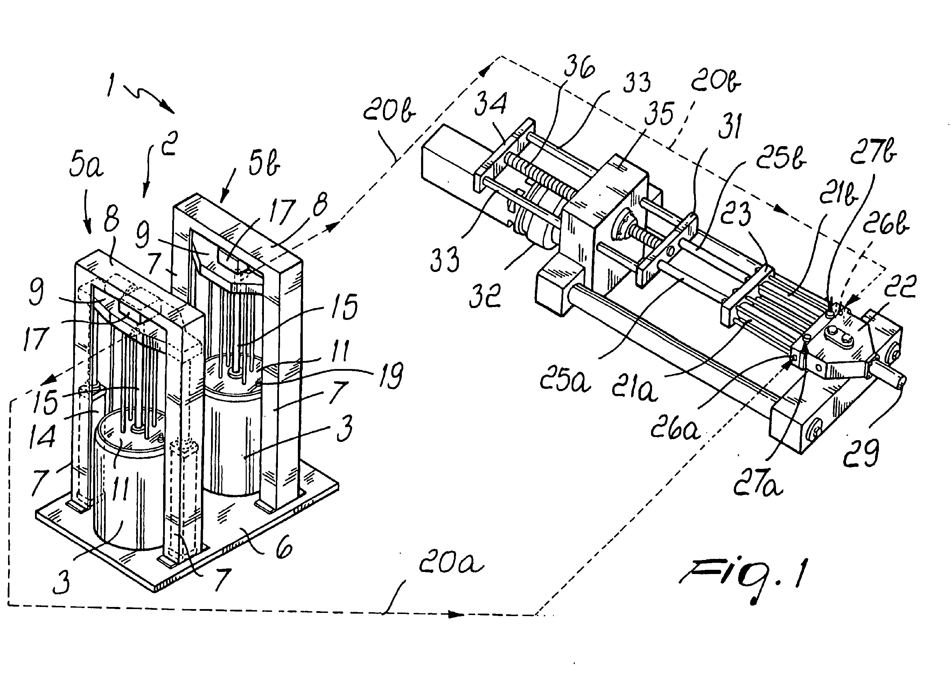

Once the containers 3 have been opened, the hydraulic or pneumatic cylinders 14 are operated, causing the gradual descent of the presser disks 11, which enter the storage containers 3, gradually pressurizing the component of the silicone that is contained therein, as shown in Figures 1 and 2.

During this step of operation, the valve 19 is opened so as to allow venting of the air present between the free surface of the component of the silicone and the lower face of the presser disk 11.

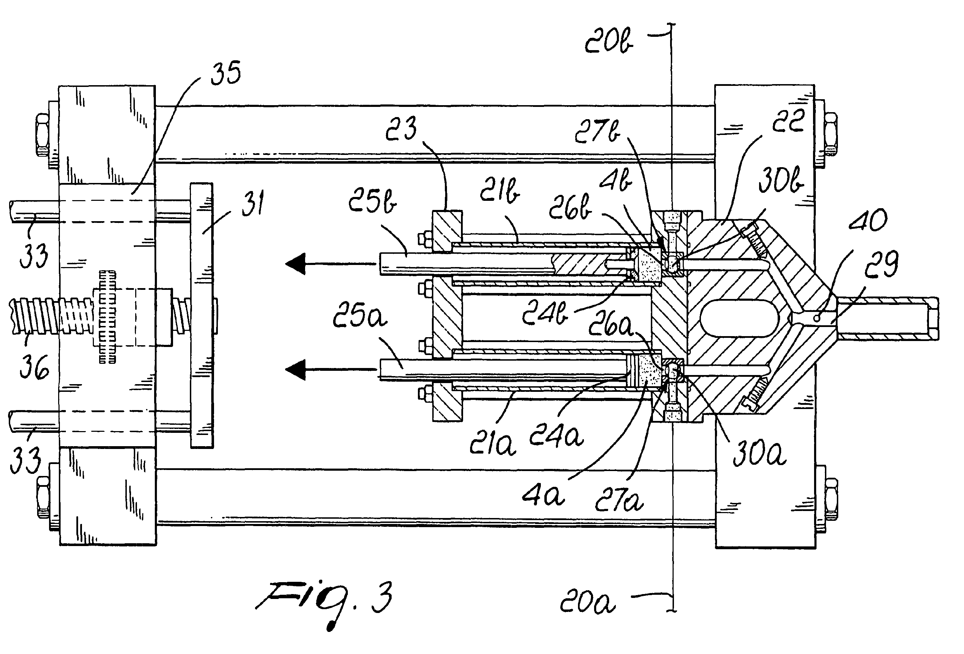

In the meantime, depending on the amount of silicone required by the user device, the pusher plate 31 has been moved, by actuating the gearmotor 32, to a preset distance from the stems 25a, 25b of the plungers 24a, 24b that are located at the end of the pre-dosage chambers 4a, 4b in which the ports 26a, 26b are provided. Furthermore, the flow control elements 30a, 30b of the three-way valves 27a, 27b are in the first position, in which they connect the ports 26a, 26b exclusively to the corresponding duct 20a, 20b, as shown in Figure 3.

The descent of the presser disk 11, for each of the units 5a, 5b, increases the pressure of the corresponding component of the silicone that enters the lower end of the tube 15 and is pushed partially, by the action of this pressure, so that it rises along the tube 15.

The actuation of the screw feeder 16 causes the gradual advancement of the component of the silicone along the tube 15 and pumps it, with a pressure of a few bars, along the corresponding duct 20a, 20b.

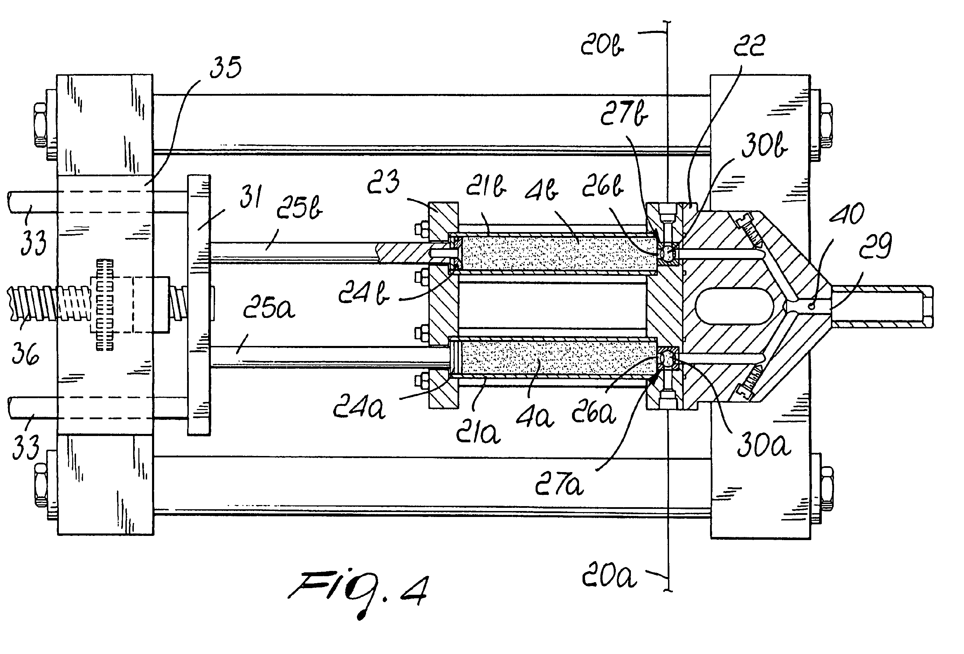

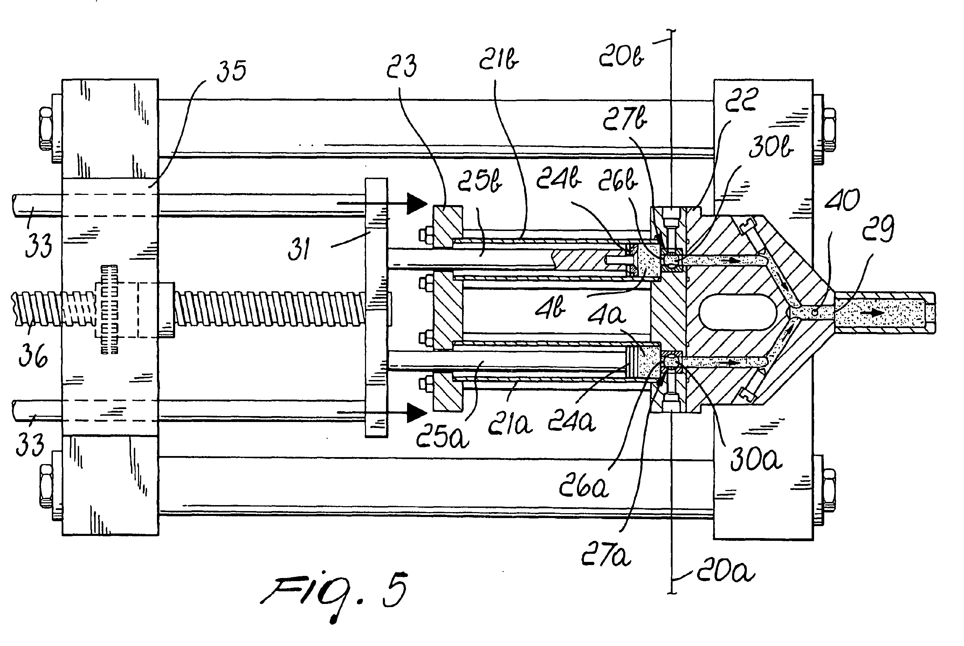

The two components of the silicone are then conveyed into the pre-dosage chambers 4a, 4b and cause the advancement of the plungers 24a, 24b toward the pusher plate 31. When the stem 25a, 25b of a plunger 24a or 24b arrives against the pusher plate 31, a pressure increase occurs inside the corresponding pre-dosage chamber 4a or 4b and is detected by said pressure sensor. As a consequence of the sensing of this pressure increase, pumping of the corresponding component of the silicone along the duct 20a or 20b is interrupted. When both stems 25a, 25b of the plungers 24a, 24b have arrived against the pusher plate 31, this means that the pre-dosage chambers 4a, 4b are full of the corresponding component of the silicone and the pumping of the components of the silicone into the pre-dosage chambers 4a, 4b has been interrupted, as shown in Figure 4. At this point, the flow control elements 30a, 30b of the three-way valves 27a, 27b are moved into the second position, connecting the ports 26a, 26b exclusively to the injection duct 29, and the gearmotor 32 is actuated, causing the translational motion of the pusher plate 31 toward the head 22, accordingly causing the expulsion of the components of the silicone from the pre-dosage chambers 4a, 4b and their flow into the injection duct 29, as shown in Figure 5.

As mentioned earlier, the injection duct 29 may feed a silicone injection-molding press of the conventional type or, particularly if the gearmotor 32 is controlled by a variable speed variable-torque motor, can be used to inject the silicone into the mold directly and therefore even in the absence of a true injection-molding press.

Once the pre-dosage chambers 4a, 4b have been emptied, the flow control elements 30a, 30b of the three-way valves 27a, 27b are returned to the first position and pumping of the components of the silicone along the tubes 15 and along the ducts 20a, 20b resumes. At this point, operation is repeated as already described.

The injection duct 29 can be connected to an injection-molding press, which injects the silicone into the mold.

As an alternative, the injection duct 29 can end with an injection nozzle to be used to inject directly the silicone into the mold. In this case, the motor of the gearmotor 32 is preferably of the variable-torque variable-speed type and can be managed by a PLC logic system in order to modulate, by varying the flow-rate and the pressure, the injection of the silicone into the mold, thus making it unnecessary to use an injection-molding press.

In practice it has been found that the apparatus according to the invention fully achieves the intended aim, since by operating at low pressure it allows considerable savings as regards the sizing of the entire apparatus and for its management. Furthermore, the apparatus according to the invention is capable of varying in an extremely simple manner the amount of silicone prepared, so as to meet the most disparate requirements of users.

Another advantage of the apparatus according to the invention, which arises from the fact that all the parts that make contact with the components of the silicone can be disassembled, is that it is quick to clean when changing the material being used.

It should also be noted that the apparatus according to the invention can be used with storage containers having different capacities simply by replacing the presser disks.

A further advantage of the apparatus according to the invention is that it can inject the silicone into the mold directly, without resorting to an injection-molding press.

In practice, the materials used, so long as they are compatible with the specific use, as well as the dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus (1) for preparing two-component silicone and for feeding it to an injection-molding press or to a mold. said apparatus comprises: drawing means (2) for drawing the two components of the silicone from respective storage containers (3) and for conveying them at low pressure into respective pre-dosage chambers (4a,4b); means (24a,24b,31) for simultaneously injecting said two components of the silicone from said pre-dosage chambers (4a,4b) into an injection duct (29); and means for mixing said two components of the silicone along said injection duct (29), said drawing means (2) comprising, for each one of said two components of the silicone, a presser disk (11) that is insertable coaxially through a base (6) of the substantially cylindrical storage container (3) of the silicone component; said presser disk (11) being hermetically associable with the side walls of the storage container (3) and being movable on command along the axis of the storage container (3), **characterized in that** said drawing means (2) comprise a tube (15) that is connected to said presser disk (11) and is connected, at one of its axial ends, to an intake port that passes through said presser disk (11); a screw feeder (16) being arranged coaxially inside said tube (15) and being actuatable with a rotary motion about its own axis in order to produce the advancement of the corresponding component of the silicone from said presser disk (11) along said tube (15); said tube (15) being connected, proximate to its end arranged opposite the end connected to said presser disk (11), to a respective pre-dosage chamber (4a,4b).

2. The apparatus (1) according to claim 1, **characterized in that** each one of said pre-dosage chambers (4a,4b) is substantially cylindrical and accommodates a plunger (24a,24b) that can move axially along the corresponding pre-dosage chamber (4a,4b); each pre-dosage chamber (4a,4b) having, proximate to a first axial end, a port (26a,26b) that can be connected to the respective tube (15) of said drawing means (2), means (31) for delimiting the stroke of plungers (24a,24b) of said pre-dosage chambers (4a,4b) being provided, said stroke being correlated to the volume of the components of the silicone introduced in said pre-dosage chambers (4a,4b).

3. The apparatus (1) according to one or more of the preceding claims, **characterized in that** said pre-dosage chambers (4a,4b) are arranged side by side parallel to each other and said plungers (24a,24b) have a stem (25a,25b) that protrudes from the axial end of the corresponding pre-dosage chamber (4a,4b) that lies opposite said first axial end; said means for delimiting the stroke of said plungers (24a,24b) comprising a pusher plate (31) that faces said stems (25a,25b) of the plungers (24a,24b) and forms a stop element for the motion of said plungers (24a,24b) away from said first axial end by way of the introduction, in the corresponding pre-dosage chamber (4a,4b), of the silicone component performed by said drawing means (2); said pusher plate (31) being movable on command in order to vary its position along an adjustment direction that is parallel to the axis of said pre-dosage chambers (4a,4b) and so as to correspondingly vary the stroke allowed to said plungers (24a,24b) away from said first end of the pre-dosage chambers (4a,4b) and therefore in order to vary the volume of said pre-dosage chambers (4a,4b) that can actually be filled

4. The apparatus (1) according to one or more of the preceding claims,
**characterized in that** said injection-molding means comprise said pusher plate (31) and said plungers (24a,24b); said pusher plate (31) being movable on command along a direction that is substantially parallel to the axis of said pre-dosage chambers (4a,4b) toward said first end of the pre-dosage chambers (4a,4b) in order to expel, by means of said plungers (24a,24b), the silicone components contained in said pre-dosage chambers (4a,4b) through the corresponding port (26a,26b), which is located proximate to the first end of the corresponding pre-dosage chamber (4a,4b) and can be connected to said injection duct (29).

5. The apparatus (1) according to one or more of the preceding claims,
**characterized in that** said mixing means comprise a static mixer arranged along said injection duct (29).

6. The apparatus (1) according to one or more of the preceding claims,
**characterized in that** said port (26a,26b) of each one of said pre-dosage chambers (4a,4b) can be selectively connected to the corresponding tube (15) of the drawing means (2) or to said injection duct (29) by means of a controllable valve (27a, 27b).

7. The apparatus (1) according to one or more of the preceding claims,
**characterized in that** it comprises means for sensing the pressure in said pre-dosage chambers (4a,4b), said means being functionally connected to said drawing means (2).

8. The apparatus (1) according to one or more of the preceding claims,
**characterized in that** said pusher plate (31) can be actuated on command along said direction that is substantially parallel to the axes of said pre-dosage chambers (4a,4b) toward said first end of the pre-dosage chambers (4a,4b) with substantially constant thrust force and speed.

9. The apparatus (1) according to one or more of the preceding claims,
**characterized in that** said pusher plate (31) can be actuated on command along said direction that is substantially parallel to the axes of said pre-dosage chambers (4a,4b) toward said first end of the pre-dosage chambers (4a,4b) with variable speed and thrust force.

10. The apparatus (1) according to one or more of the preceding claims,
**characterized in that** it comprises an injection nozzle that is arranged on the outlet of said injection duct (29) and can be inserted in a mold.

11. The apparatus (1) according to one or more of the preceding claims,
**characterized in that** it comprises an air venting valve (19) located on said presser disk (11).

12. The apparatus (1) according to one or more of the preceding claims,
**characterized in that** it comprises an air venting valve arranged on the duct (20a,20b) that connects said tube (15) to the corresponding pre-dosage chamber (4a,4b).

13. The apparatus (1) according to one or more of the preceding claims,
**characterized in that** said screw feeder (16) is actuated by a variable-speed gearmotor (17).

## Patentansprüche

1. Vorrichtung (1) zur Herstellung von Zweikomponenten-Silikon und zu dessen Zufuhr zu einer Spritzgusspresse oder zu einer Form, welche Vorrichtung Folgendes umfasst: Ziehmittel (2) zum Ziehen der zwei Komponenten des Silikons aus jeweiligen Speicherbehältern (3) und zu dessen Förderung mit niedrigem Druck in jeweilige Vordosierkammern (4a,4b); Mittel (24a,24b,31) zum gleichzeitigen Einspritzen der zwei Komponenten des Silikons aus den Vordosierkammern (4a,4b) in einen Einspritzkanal (29), und Mittel zum Mischen der zwei Komponenten des Silikons entlang des Einspritzkanals (29), wobei die Ziehmittel (2) für eine jede der zwei Komponenten des Silikons eine Pressscheibe (11) umfassen, die koaxial durch eine Basis (6) des im Wesentlichen zylindrischen Speicherbehälters (3) der Silikonkomponente einführbar ist; wobei die Pressscheibe (11) hermetisch mit den Seitenwänden des Speicherbehälters (3) vereinigbar ist und auf Befehl entlang der Achse des Speicherbehälters (3) beweglich ist, **dadurch gekennzeichnet, dass** die Ziehmittel (2) ein Rohr (15) umfassen, das mit der Pressscheibe (11) verbunden ist und an einem seiner axialen Enden mit einer Eintrittsöffnung verbunden ist, die durch die Pressscheibe (11) hindurchgeht; ein Schraubenzuführapparat (16) koaxial innerhalb des Rohrs (15) angeordnet ist und mit einer Drehbewegung um seine eigene Achse antreibbar ist, um das Vorrücken der entsprechenden Komponente des Silikons von der Pressscheibe (11) entlang des Rohrs (15) zu erzeugen; das Rohr (15) nahe an seinem Ende, das gegenüber dem mit der Pressscheibe (11) verbundenen Ende angeordnet ist, mit einer jeweiligen Vordosierkammer (4a,4b) verbunden ist.

2. Vorrichtung (1) nach Anspruch 1, **dadurch**
**gekennzeichnet, dass** eine jede der Vordosierkammern (4a,4b) im Wesentlichen zylindrisch ist und einen Presskolben (24a,24b) aufnimmt, der sich axial entlang der entsprechenden Vordosierkammer (4a,4b) bewegen kann; jede Vordosierkammer (4a,4b) nahe an einem ersten axialen Ende eine Öffnung (26a,26b) aufweist, die mit dem jeweiligen Rohr (15) der Ziehmittel (2) verbunden werden kann, Mittel (31) zum Begrenzen des Hubs der Presskolben (24a,24b) der Vordosierkammern (4a,4b) vorgesehen sind, wobei der Hub mit dem Volumen der in die Vordosierkammern (4a,4b) eingeleiteten Komponenten des Silikons korreliert ist.

3. Vorrichtung (1) nach einem oder mehreren der vorhergehenden Ansprüche, **dadurch gekennzeichnet, dass** die Vordosierkammern (4a,4b) nebeneinander parallel zueinander angeordnet sind und die Presskolben (24a,24b) einen Stiel (25a,25b) aufweisen, der von dem axialen Ende der entsprechenden Vordosierkammer (4a,4b) vorsteht, das dem ersten axialen Ende gegenüber liegt; die Mittel zum Begrenzen des Hubs der Presskolben (24a,24b) eine Schubplatte (31) umfassen, die den Stielen (25a,25b) der Presskolben (24a,24b) gegenüberliegt und ein Anschlagelement für die Bewegung der Presskolben (24a,24b) vom ersten axialen Ende weg im Wege der durch die Ziehmittel (2) durchgeführten Einleitung der Silikonkomponente in die entsprechende Vordosierkammer (4a,4b) bildet; die Schubplatte (31) auf Befehl beweglich ist, um ihre Position entlang einer Einstellrichtung zu verändern, die parallel zur Achse der Vordosierkammern (4a,4b) ist, und um den den Presskolben (24a,24b) erlaubten Hub vom ersten Ende der Vordosierkammern (4a,4b) weg entsprechend zu verändern und um daher das Volumen der Vordosierkammern (4a,4b), das tatsächlich gefüllt werden kann, zu verändern.

4. Vorrichtung (1) nach einem oder mehreren der vorhergehenden Ansprüche, **dadurch gekennzeichnet, dass** die Spritzgussmittel die Schubplatte (31) und die Presskolben (24a,24b) umfassen; die Schubplatte (31) auf Befehl entlang einer Richtung, die im Wesentlichen parallel zur Achse der Vordosierkammern (4a,4b) ist, in Richtung auf das erste Ende der Vordosierkammern (4a,4b) beweglich ist, um mittels der Presskolben (24a,24b) die in den Vordosierkammern (4a,4b) enthaltenen Silikonkomponenten durch die entsprechende Öffnung (26a,26b) auszustoßen, welche nahe am ersten Ende der entsprechenden Vordosierkammer (4a,4b) liegt und mit dem Einspritzkanal (29) verbunden werden kann.

5. Vorrichtung (1) nach einem oder mehreren der vorhergehenden Ansprüche, **dadurch gekennzeichnet, dass** die Mischmittel einen statischen Mischer umfassen, der entlang des Einspritzkanals (29) angeordnet ist.

6. Vorrichtung (1) nach einem oder mehreren der vorhergehenden Ansprüche, **dadurch gekennzeichnet, dass** die Öffnung (26a,26b) einer jeden der Vordosierkammern (4a,4b) mittels eines steuerbaren Ventils (27a,27b) wahlweise mit dem entsprechenden Rohr (15) der Ziehmittel (2) oder mit dem Einspritzkanal (29) verbunden werden kann.

7. Vorrichtung (1) nach einem oder mehreren der vorhergehenden Ansprüche, **dadurch gekennzeichnet, dass** sie Mittel zum Abfühlen des Drucks in den Vordosierkammern (4a,4b) umfasst, welche Mittel funktionell mit den Ziehmitteln (2) verbunden sind.

8. Vorrichtung (1) nach einem oder mehreren der vorhergehenden Ansprüche, **dadurch gekennzeichnet, dass** die Schubplatte (31) auf Befehl entlang der Richtung, die im Wesentlichen parallel zu den Achsen der Vordosierkammern (4a,4b) ist, mit im Wesentlichen konstanter Schubkraft und Geschwindigkeit in Richtung auf das erste Ende der Vordosierkammern (4a,4b) angetrieben werden kann.

9. Vorrichtung (1) nach einem oder mehreren der vorhergehenden Ansprüche, **dadurch gekennzeichnet, dass** die Schubplatte (31) auf Befehl entlang der Richtung, die im Wesentlichen parallel zu den Achsen der Vordosierkammern (4a,4b) ist, mit veränderlicher Geschwindigkeit und Schubkraft in Richtung auf das erste Ende der Vordosierkammern (4a,4b) angetrieben werden kann.

10. Vorrichtung (1) nach einem oder mehreren der vorhergehenden Ansprüche, **dadurch gekennzeichnet, dass** sie eine Einspritzdüse umfasst, die am Auslass des Einspritzkanals (29) angeordnet ist und in eine Form eingeführt werden kann.

11. Vorrichtung (1) nach einem oder mehreren der vorhergehenden Ansprüche, **dadurch gekennzeichnet, dass** sie ein Luftentlüftungsventil (19) umfasst, das an der Pressscheibe (11) angeordnet ist.

12. Vorrichtung (1) nach einem oder mehreren der vorhergehenden Ansprüche, **dadurch gekennzeichnet, dass** sie ein Luftentlüftungsventil umfasst, das an dem Kanal (20a,20b) angeordnet ist, der das Rohr (15) mit der entsprechenden Vordosierkammer (4a,4b) verbindet.

13. Vorrichtung (1) nach einem oder mehreren der vorhergehenden Ansprüche, **dadurch gekennzeichnet, dass** der Schraubenzuführapparat (16) durch einen Getriebemotor (17) mit veränderlicher Geschwindigkeit angetrieben wird.

## Revendications

1. Dispositif (1) pour la préparation de silicone à base de deux composants et pour l'alimentation de celui-ci dans une presse de moulage par injection ou dans un moule, ledit dispositif comprend: des moyens d'extraction (2) pour extraire les deux composants du silicone de conteneurs de stockage (3) respectifs et pour les amener à basse pression dans des chambres de pré-dosage (4a, 4b) respectives; des moyens (24a, 24b, 31) pour injecter simultanément lesdits deux composants du silicone depuis les chambres de pré-dosage (4a, 4b) dans un conduit d'injection (29); et des moyens pour mélanger lesdits deux composants du silicone le long dudit conduit d'injection (29), lesdits moyens d'extraction (2) comprenant, pour chacun desdits deux composants du silicone, un disque pressoir (11) qui peut être inséré de façon coaxiale à travers une base (6) du conteneur de stockage (3) sensiblement cylindrique du composant de silicone; ledit disque pressoir (11) pouvant être associé de façon hermétique avec les parois latérales du conteneur de stockage (3) et pouvant être déplacé sur commande le long de l'axe du conteneur de stockage (3), **caractérisé en ce que** lesdits moyens d'extraction (2) comprennent un tube (15) qui est relié audit disque pressoir (11) et est relié, à l'une de ses extrémités axiales, à un orifice d'entrée qui passe à travers ledit disque pressoir (11); un alimentateur à vis (16) étant agencé de façon coaxiale à l'intérieur dudit tube (15) et pouvant être actionné avec un mouvement rotatoire autour de son axe afin de produire l'avancée du composant correspondant du silicone depuis ledit disque pressoir (11) le long dudit tube (15); ledit tube (15) étant relié, à proximité de son extrémité agencée à l'opposé de l'extrémité reliée audit disque pressoir (11), à une chambre de pré-dosage respective (4a, 4b).

2. Dispositif (1) selon la revendication 1, **caractérisé en ce que** chacune desdites chambres de pré-dosage (4a, 4b) est sensiblement cylindrique et reçoit un plongeur (24a, 24b) qui peut se déplacer de façon axiale le ,ong de la chambre de pré-dosage correspondante (4a, 4b); chaque chambre de pré-dosage (4a, 4b) présentant, à proximité d'une première extrémité axiale, un orifice (26a, 26b) qui peut être relié au tube (15) correspondant desdits moyens d'extraction (2), des moyens (31) pour délimiter la course des plongeurs (24a, 24b) desdites chambres de pré-dosage (4a, 4b) étant prévus, ladite course étant en corrélation avec le volume des composants du silicone introduits dans lesdites chambres de pré-dosage (4a, 4b).

3. Dispositif (1) selon l'une ou plusieurs des revendications précédentes, **caractérisé en ce que** lesdits chambres de pré-dosage (4a, 4b) sont agencées cote à cote parallèles entre elles et lesdits plongeurs (24a, 24b) sont présentent une tige (25a, 25b) qui fait saillie de l'extrémité axiale de la chambre de pré-dosage (4a, 4b) correspondante qui se trouve opposée à ladite première extrémité axiale; lesdits moyens pour délimiter la course desdits plongeurs (24a, 24b) comprenant une plaque poussoir (31) qui fait face auxdites tiges (25a, 25b) desdits plongeurs (24a, 24b) et forme un élément d'arrêt pour l'éloignement desdits plongeurs (24a, 24b) de ladite première extrémité axiale au moyen de l'introduction, dans ladite chambre de pré-dosage (4a, 4b) correspondante, du composant de silicone exécutée par lesdits moyens d'extraction (2); ladite plaque poussoir (31) pouvant être déplacée sur commande afin de varier sa position le long d'une direction de réglage qui est parallèle à l'axe desdites chambres de pré-dosage (4a, 4b) et de sorte à varier de façon correspondante la course permise auxdits plongeurs (24a, 24b) loin de ladite première extrémité des chambres de pré-dosage (4a, 4b) et ainsi afin de varier le volume desdites chambres de pré-dosage (4a, 4b) qui peuvent être effectivement remplies.

4. Dispositif (1) selon l'une ou plusieurs des revendications précédentes, **caractérisé en ce que** lesdits moyens de moulage par injection comprennent ladite plaque poussoir (31) et lesdits plongeurs (24a, 24b); ladite plaque poussoir (31) pouvant être déplacée sur commande suivant une direction qui est sensiblement parallèle à l'axe desdites chambres de pré-dosage (4a, 4b) vers ladite première extrémité des chambres de pré-dosage (4a, 4b) de façon à expulser, au moyen desdits plongeurs (24a, 24b), les composants de silicone contenus dans lesdites chambres de pré-dosage (4a, 4b) à travers un orifice (26a, 26b) correspondant, qui est situé à proximité de la première extrémité de la chambre de pré-dosage (4a, 4b) correspondante et peut être relié audit conduit d'injection (29).

5. Dispositif (1) selon l'une ou plusieurs des revendications précédentes, **caractérisé en ce que** lesdits moyens de mélange comprennent un mélangeur statique agencé le long dudit conduit d'injection (29).

6. Dispositif (1) selon l'une ou plusieurs des revendications précédentes, **caractérisé en ce que** ledit orifice (26a, 26b) de chacune desdites chambres de pré-dosage (4a, 4b) peut être relié sélectivement au tube (15) correspondant desdits moyens d'extraction (2) ou audit conduit d'injection (29) au moyen d'une valve contrôlable (27a, 27b).

7. Dispositif (1) selon l'une ou plusieurs des revendications précédentes, **caractérisé en ce qu'**il comprend des moyens pour capter la pression dans lesdites chambres de pré-dosage (4a, 4b), lesdits moyens étant reliés de façon fonctionnelle auxdits moyens d'extraction (2).

8. Dispositif (1) selon l'une ou plusieurs des revendications précédentes, **caractérisé en ce que** ladite plaque poussoir (31) peut être actionnée sur commande suivant ladite direction qui est sensiblement parallèle aux axes desdites chambres de pré-dosage (4a, 4b) vers ladite première extrémité des chambres de pré-dosage (4a, 4b) avec une vitesse et une force de poussée sensiblement constantes.

9. Dispositif (1) selon l'une ou plusieurs des revendications précédentes, **caractérisé en ce que** ladite plaque poussoir (31) peut être actionnée sur commande suivant ladite direction qui est sensiblement parallèle aux axes desdites chambres de pré-dosage (4a, 4b) vers ladite première extrémité des chambres de pré-dosage (4a, 4b) avec une vitesse et une force de poussée variables.

10. Dispositif (1) selon l'une ou plusieurs des revendications précédentes,
**caractérisé en ce qu'**il comprend une buse d'injection qui est agencée à la sortie dudit conduit d'injection (29) et peut être insérée dans un moule.

11. Dispositif (1) selon l'une ou plusieurs des revendications précédentes,
**caractérisé en ce qu'**il comprend une valve d'évacuation d'air (19) située sur ledit disque pressoir (11)

12. Dispositif (1) selon l'une ou plusieurs des revendications précédentes,
**caractérisé en ce qu'**il comprend une valve d'évacuation d'air agencée sur le conduit (20a, 20b) qui relie ledit tube (15) à la chambre de pré-dosage correspondante (4a, 4b).

13. Dispositif (1) selon l'une ou plusieurs des revendications précédentes,
**caractérisé en ce que** ledit alimentateur à vis (16) est actionné par un motoréducteur à vitesse variable.
